# DEMANDE DE BREVET EUROPEEN

(11) **EP 2 840 530 A1**
(43) Date de publication de la demande: **25.02.2015**
(21) Numéro de dépôt: 13306170.5
(22) Date de dépôt: 23.08.2013
(51) Int. Cl.: G06K 19/077

(54) **Dispositif électronique à mémoire**

(71) Demandeur: Gemalto SA, 92190 Meudon (FR)
(72) Inventeur: LE LOC'H, Alain, 13705 LA CIOTAT (FR); DUBOIS, Béatrice, 13705 LA CIOTAT (FR)

(57) **Abrégé**

L'invention porte sur un dispositif électronique fonctionnant sans contact et sur son procédé de fabrication. Le dispositif électronique comprend un corps (10) isolant électriquement, une cavité (11) ménagée dans le corps (10), une puce de circuit intégré (20) disposée dans la cavité, un matériau isolant de recouvrement (24) de ladite puce de circuit intégré, et un premier circuit électrique (12) comprenant d'une part, au moins un premier point de raccordement électrique (13) à ladite puce de circuit intégré (20), ledit au moins un point de raccordement (13) étant disposé dans la cavité (11) et d'autre part, au moins une plage électrique (14) débouchant hors du matériau isolant de recouvrement (24). Le dispositif est principalement caractérisé en ce que ladite au moins une plage électrique (14) constitue un point d'interconnexion destiné à connecter électriquement un deuxième circuit électrique (31) disposé sur une des faces du corps (10) et/ou sur ledit matériau isolant de recouvrement (24).

## Description

L'invention concerne le domaine technique des dispositifs électroniques à mémoire et microprocesseur. Plus particulièrement, elle se rapporte à des dispositifs électroniques comprenant une puce de circuit intégré et un circuit électrique électriquement relié à la puce de circuit intégré. De tels dispositifs se présentent par exemple sous forme de carte, d'étiquette, de ticket ou de livret et trouvent des applications notamment dans le contrôle d'accès, les transports, l'identification ou le paiement par exemple.

Parmi les cartes à puce, il existe des cartes à contacts affleurant, destinés à établir une connexion avec un lecteur à contact, qui sont réalisées selon une technique consistant à disposer une puce de circuit intégré dans le fond d'une cavité, la puce étant électriquement reliée à des pistes conductrices qui s'étendent du fond de la cavité vers la surface du corps de carte pour former les contacts. La cavité est ensuite comblée par un matériau de comblement afin de protéger mécaniquement la puce et ses connexions.

Avec l'évolution des applications des cartes à puces et des techniques de fabrication, on sait également intégrer des circuits électriques dans un corps de carte et les connecter électriquement à la puce. De tels circuits électriques peuvent par exemple comprendre une antenne radio fréquence ou une antenne ultra haute fréquence et/ou une capacité, une self ou tout autre circuit électrique.

Cependant, il n'est pas toujours possible de placer le circuit électrique n'importe où dans le corps de carte, car il faut pouvoir non seulement le protéger mécaniquement, mais également électriquement, en évitant notamment l'apparition de court-circuit.

Un premier problème consiste donc à encarter une puce de circuit intégré dans un corps support avec protection mécanique, et à raccorder la puce à un circuit électrique pouvant être disposé n'importe où dans le corps, de manière simple, rapide et peu coûteuse.

Parmi les dispositifs électroniques comprenant un circuit électrique, on connait notamment les dispositifs sans contact, dont le circuit électrique est une antenne. Ces dispositifs électroniques sont couplés avec le milieu extérieur par induction électromagnétique, grâce à l'antenne qui se présente par exemple sous la forme d'une boucle spiralée connectée, par ses bornes d'extrémité, à la puce de circuit intégré. Le corps du dispositif est réalisé en matériau isolant électriquement, tel que par exemple du papier, du carton ou du plastique. La puce de circuit intégré est enchâssée dans le corps du dispositif, et l'antenne peut l'être aussi. L'antenne est en général réalisée soit par sérigraphie, soit par dépôt d'un fil métallique par soudure thermique dans le corps du dispositif. L'une des extrémités de l'antenne, située en général la plus à l'intérieur du motif spiralé, peut aisément être reliée à l'un des plots de contact de la puce de circuit intégré. En revanche, l'autre extrémité de l'antenne, située en général la plus à l'extérieur du motif spiralé, se retrouve décalée par rapport à l'autre plot de contact de la puce de circuit intégré, si bien qu'une liaison de raccordement passant au-dessus des spires de l'antenne est classiquement réalisée. Une telle liaison de raccordement est réalisée en deux étapes : une première étape consiste à déposer un matériau isolant sur la zone de spires concernée par cette liaison de raccordement, puis une deuxième étape consiste à réaliser un pontage conducteur sur le matériau isolant afin de relier l'extrémité éloignée de l'antenne à l'un des plots du circuit intégré.

Bien que cette technique de connexion de la puce de circuit intégré à l'antenne soit très répandue, elle nécessite des étapes supplémentaires pour isoler les spires d'antenne afin de les recouvrir d'un pontage conducteur. Ces opérations nécessitent de surcroit une grande précision qui induit donc un coût de fabrication encore trop élevé.

Des solutions alternatives ont été envisagées pour éviter de réaliser une telle liaison de raccordement, notamment pour les cartes hybrides, c'est-à-dire les cartes fonctionnant avec et/ou sans contact. Le document US5 671 525, décrit par exemple une solution selon laquelle deux plages de contact du bornier de connexion sont prolongées par des lames métalliques vers deux zones de contact situées sur la face cachée du module électronique. Le module électronique est alors placé dans une cavité, dans laquelle sont pratiqués des vias conducteurs au droit des bornes d'extrémités de l'antenne, réalisée sur une couche inférieure, et sur lesquels viennent se connecter les deux zones de contact de la face cachée du module.

Une solution, décrite dans le document EP0941 520 pour des cartes fonctionnant exclusivement sans contact, consiste à réduire localement la largeur des pistes de l'antenne, dans une zone entourant le circuit intégré, la largeur des spires d'antenne étant réduite à des lignes affleurant la surface du circuit intégré et passant entre ses deux plots de contact. Cette solution reste cependant assez fastidieuse et coûteuse car elle nécessite une grande précision pour d'une part réduire les spires à des lignes et d'autre part, faire passer les lignes entre les plots de contact du circuit intégré.

L'invention a donc pour but de remédier à au moins un des inconvénients de l'art antérieur. En particulier, l'invention vise à proposer une solution alternative simple et peu coûteuse pour réaliser un dispositif électronique ne comprenant pas de liaison de raccordement passant au-dessus des éléments conducteurs du circuit électrique à relier à la puce de circuit intégré, c'est-à-dire ne comprenant pas de liaison de raccordement passant au-dessus des spires d'antenne dans le cas où le circuit électrique est une antenne. L'invention vise également à proposer un procédé de fabrication simplifié d'un dispositif électronique qui permet de réduire le nombre d'étapes de fabrication, qui requiert moins de précision pour la connexion de la puce de circuit intégré au circuit électrique et qui permet de placer le circuit électrique n'importe où dans le corps du dispositif de manière simple, rapide et peu couteuse.

A cet effet, l'invention a pour objet un dispositif électronique comprenant un corps isolant électriquement, une cavité ménagée dans le corps, une puce de circuit intégré disposée dans la cavité, un matériau isolant de recouvrement de ladite puce de circuit intégré, un premier circuit électrique comprenant d'une part, au moins un premier point de raccordement électrique à ladite puce de circuit intégré, ledit au moins un point de raccordement étant disposé dans la cavité et d'autre part, au moins une plage électrique débouchant hors du matériau isolant de recouvrement, ledit dispositif étant **caractérisé en ce que** ladite au moins une plage électrique constitue un point d'interconnexion destiné à connecter électriquement un deuxième circuit électrique disposé sur une des faces du corps et/ou sur ledit matériau isolant de recouvrement.

Ainsi, le premier circuit électrique permet de connecter facilement les plots de contact de la puce de circuit intégré aux bornes d'extrémité du deuxième circuit électrique, sans requérir une grande précision. Lorsque le deuxième circuit électrique est une antenne par exemple, le matériau isolant de recouvrement et/ou le corps du dispositif agit en tant que pont isolant pour les spires d'antenne, si bien que la réalisation fastidieuse d'une liaison de raccordement passant au-dessus des spires d'antenne n'est plus nécessaire.

Selon d'autres caractéristiques optionnelles du dispositif électronique:
- le deuxième circuit électrique comprend au moins un élément choisi parmi l'un au moins des éléments suivants : une antenne radio fréquence, une antenne ultra haute fréquence, une capacité, une self, une plaque de condensateur ;
- le matériau isolant de recouvrement recouvre la puce de circuit intégré et/ou ses points de raccordement,
- le matériau de recouvrement comble totalement la cavité et affleure la surface du corps,
- le deuxième circuit électrique s'étend principalement sur le matériau isolant de recouvrement,
- les points d'interconnexion du premier circuit électrique sont disposés à la surface du corps du dispositif, de part et d'autre de ladite cavité,
- le deuxième circuit électrique est une antenne à motif spiralé, reportée à la surface du corps, dont les spires recouvrent le matériau isolant de recouvrement et dont les bornes d'extrémité sont reliées aux points d'interconnexion du premier circuit électrique,
- le premier circuit électrique comprend en outre au moins un via conducteur reliant ledit au moins un point de raccordement audit au moins un point d'interconnexion, ledit point d'interconnexion étant disposé sur une surface du corps opposée à la surface supportant ladite cavité,
- la cavité présente des flancs inclinés,
- le premier circuit électrique comprend au moins deux points de raccordement disposés en regard l'un de l'autre et au moins deux points d'interconnexion disposés en regard l'une de l'autre,
- le matériau de constitution des premier et deuxième circuits électriques est une encre conductrice choisie parmi l'une au moins des encres suivantes : une encre à base de nanoparticules métalliques, une encre à base de nanotubes de carbone ou de graphène, une encre à base de polymères conducteurs, ou encore un complexe métal à base de ligand organique,
- le deuxième circuit électrique est recouvert d'un vernis protecteur ou d'une couche dont le matériau de constitution est choisi parmi un plastique, du papier ou du carton,
- le dispositif est l'un des dispositifs suivants : une carte à puce avec et/ou sans contact, un ticket avec et/ou sans contact, une étiquette avec et/ou sans contact, un livret de type passeport.

L'invention se rapporte en outre à un procédé de fabrication d'un dispositif électronique comportant un corps isolant électriquement, ledit procédé consistant à ménager une cavité dans ledit corps, pour y reporter une puce de circuit intégré qui est ensuite recouverte d'un matériau isolant de recouvrement, et à réaliser un premier circuit électrique comprenant d'une part, au moins un point de raccordement à ladite puce de circuit intégré et d'autre part, une plage électrique débouchant hors du matériau isolant de recouvrement, ledit procédé étant **caractérisé en ce qu'il** comprend en outre une étape consistant à réaliser un deuxième circuit électrique sur une des faces du corps et/ou sur ledit matériau isolant de recouvrement et à le connecter électriquement sur ladite au moins une plage électrique qui constitue un point d'interconnexion..

Selon d'autres caractéristiques optionnelles du procédé de fabrication:
- la cavité est réalisée par moulage ou par embossage,
- la cavité est réalisée avec des flancs inclinés vers la surface,
- les premier (12) et deuxième (31, 32) circuits électriques sont réalisés par impression d'encre conductrice par une technique de jet d'encre, spray, dépôt assisté par Laser ou de sérigraphie, flexographie ou héliographie,
- le premier circuit électrique (12) est réalisé par impression par jet d'encre, par dépôt assisté par laser, ou spray,
- la réalisation du premier circuit électrique comprend en outre une étape de réalisation d'au moins un via conducteur entre ledit au moins un point de raccordement (13) et ledit au moins un point d'interconnexion (14), ledit point d'interconnexion (14) étant disposé sur une surface du corps (10) opposée à la surface supportant ladite cavité (11),
- le deuxième circuit électrique est réalisé par impression par sérigraphie, flexographie, ou héliographie,
- une étape ultérieure consiste à appliquer un vernis de protection ou à reporter une couche en matériau plastique, papier ou carton sur la surface du corps supportant l'antenne.

D'autres particularités et avantages de l'invention apparaitront à la lecture de la description suivante faite à titre d'exemple illustratif et non limitatif, en référence aux Figures annexées qui représentent :
- Les Figures 1A à 1D, des schémas en perspective d'un dispositif électronique sans contact selon un premier mode de réalisation, au cours de ses étapes de fabrication,
- La Figure 2, un schéma en coupe d'un autre dispositif électronique sans contact selon l'invention,
- La Figure 3, un schéma en coupe d'un autre dispositif électronique sans contact selon un autre mode de réalisation.

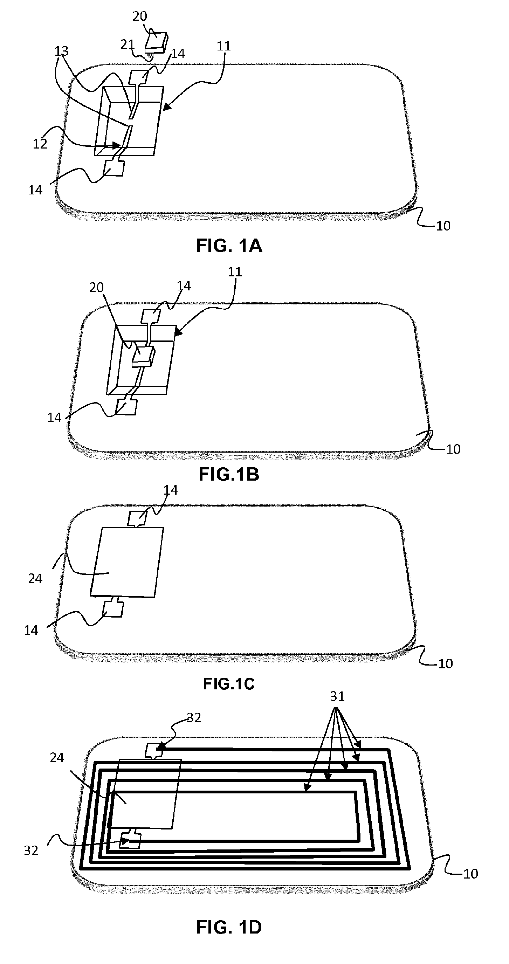

Le dispositif électronique selon l'invention peut se présenter sous différentes formes telles qu'une carte dans un des formats définis par la norme ISO7816 pour les cartes à puce avec et/ou sans contact, une étiquette, un ticket, ou même un livret lorsqu'il s'agit d'un passeport d'identité par exemple. Le corps du dispositif comprend au moins une couche en matériau isolant électriquement, référencée 10 sur les Figures 1A à 1D, qui peut être réalisée dans un matériau plastique, de type PET (Polyéthylène téréphtalate), PEN (Polyéthylène naphtalate), FR4 (résine époxy renforcée fibre de verre), PVC (Polychlorure de vinyle), PC (Polycarbonate) ou un polyimide commercialisé sous la marque Kapton par exemple, ou encore en carton ou même en papier.

L'invention s'applique à tout type de dispositif électronique comprenant un circuit électrique électriquement relié à une puce de circuit intégré. Dans les exemples décrits ci-après, le circuit électrique comprend une antenne radio fréquence, ou une antenne ultra haute fréquence. Cependant, le dispositif selon l'invention ne se limite pas à cet exemple et le circuit électrique peut avantageusement comprendre une telle antenne et/ou une capacité, une self ou tout autre circuit électrique.

Selon un premier mode de réalisation illustré sur les Figures 1A à 1D, le circuit électrique, qui se présente sous la forme d'une antenne spiralée 31, est reporté sur une face du corps 10 du dispositif dans laquelle est pratiquée une cavité 11 destinée au report de la puce 20 de circuit intégré.

Selon ce premier mode de réalisation, une première étape du procédé de fabrication de ce dispositif, illustrée sur la Figure 1A, consiste à ménager la cavité 11 dans la couche 10 de constitution du corps du dispositif.

Un premier circuit électrique est ensuite réalisé. Ce circuit électrique forme un circuit d'interconnexion et comprend avantageusement deux pistes d'interconnexion 12 qui sont réalisées de manière qu'elles s'étendent chacune entre une première extrémité 13, située dans le fond de la cavité 11, et une deuxième extrémité 14 située sur la surface de la couche 10. La première extrémité 13, située dans la cavité, forme un premier point de raccordement électrique à la puce de circuit intégré 20 qui est reportée ultérieurement (Figure 1B). La deuxième extrémité 14, débouchant à la surface de la couche 10 et présentant la forme d'une plage électrique de contact, constitue un point d'interconnexion destiné à relier électriquement un deuxième circuit électrique qui est ultérieurement reporté (Figure 1D). Afin d'assurer une continuité électrique des pistes d'interconnexion 12, la cavité présente de préférence des flancs inclinés vers la surface de la couche 10. Les pistes d'interconnexion 12 sont de préférence disposées en regard l'une de l'autre. Elles peuvent en outre être d'une taille suffisamment grande pour un report rapide des composants.

Les pistes d'interconnexion 12 sont avantageusement réalisées par impression d'encre conductrice. Elles peuvent être imprimées par la technique d'impression jet d'encre, spray ou LIFT (acronyme anglais pour « Laser Induced Forward Transfert ») qui est une technique de dépôt assisté par Laser, par sérigraphie, flexographie ou héliographie. De préférence, elles sont imprimées par jet d'encre, spray ou LIFT. Ces techniques d'impression utilisent une encre conductrice choisie parmi l'une au moins des encres suivantes : une encre à base de nanoparticules métalliques, comprenant par exemple de l'or, de l'argent du cuivre, du Palladium, de l'aluminium, ou des mélanges à base de nanoparticules de cuivre enrobées d'étain, de nanoparticules de cuivre enrobées d'argent, de nanoparticules de cuivre enrobées de palladium, ou encore de nanoparticules de cuivre enrobées d'une couche de Ni/Au, une encre à base de nanotubes de carbone ou de graphène, une encre à base de polymères conducteurs, ou encore une encre complexe métal à base de ligand organique.

Lorsque la technique d'impression utilisée est une technique par spray ou LIFT, les flancs de la cavité peuvent être verticaux sans affecter la continuité électrique des pistes d'interconnexion.

Dans une seconde étape, illustrée sur la Figure 1B, la puce de circuit intégré 20 est reportée selon la technique bien connue de « Flip Chip », consistant à retourner la puce de circuit intégré de sorte que sa face active soit en regard des points de raccordement 13 auxquels elle est électriquement connectée. La puce de circuit intégré est donc positionnée au fond de la cavité 11 de sorte que deux plots de contact soient positionnés en vis-à-vis du point de raccordement 13 de chacune des pistes d'interconnexion 12. Des bossages métalliques 21, communément appelés « bumps » en terminologie anglo-saxonne, sont réalisés sur les plots de contact de la puce de circuit intégré, afin de faciliter la connexion électrique avec les points de raccordement 13 lors de la mise en place de la puce de circuit intégré.

Une étape ultérieure, illustrée sur la Figure 1C, consiste ensuite à protéger la puce de circuit intégré par un matériau isolant de recouvrement 24 de la puce, tel qu'une résine d'enrobage. Ce matériau isolant peut être appliqué pour ne recouvrir que la puce de circuit intégré et les points de raccordement 13 afin d'en assurer leur protection mécanique. Dans ce cas, la cavité 11 est partiellement comblée par ce matériau de recouvrement 24. De préférence, le matériau isolant de recouvrement 24 est appliqué de manière à combler totalement la cavité et à affleurer la surface de la couche 10 de constitution du corps du dispositif. Ne sont alors visibles, à la surface de la couche 10, que le matériau isolant de recouvrement 24 et, répartis de part et d'autre de ce matériau de recouvrement, le point d'interconnexion 14 de chaque piste d'interconnexion.

Une antenne 31, 32 est alors réalisée à la surface de la couche 10, par impression d'encre conductrice. Tout comme pour les pistes d'interconnexion, l'impression peut également être réalisée par jet d'encre, spray, LIFT, par sérigraphie, flexographie ou encore héliographie. Cependant, la technique de sérigraphie est préférée car elle permet d'appliquer une quantité plus importante d'encre conductrice, ce qui permet l'obtention de meilleures propriétés électromagnétiques pour l'antenne.

Les spires 31 de l'antenne sont avantageusement imprimées directement sur le matériau isolant de recouvrement 24 et sur la surface de la couche 10 de constitution du corps du dispositif. Les deux bornes d'extrémités 32 de l'antenne sont avantageusement reliées respectivement au point d'interconnexion 14 de chaque piste d'interconnexion 12. Ainsi, le matériau de recouvrement 24 sert de pont isolant pour les spires d'antenne et permet d'éviter un court-circuit. Lors de cette étape, peut être également réalisé un composant passif, tel qu'une capacité par exemple. La capacité est alors imprimée entre les deux points d'interconnexion 14 qui constituent alors les deux électrodes de la capacité. Pour cela, on dépose, par jet d'encre par exemple, entre les deux électrodes, une fine couche d'isolant, qui peut par exemple être un matériau organique polymérisant aux UV. La taille des électrodes et l'épaisseur de l'isolant sont alors calculées en fonction des valeurs recherchées pour la capacité.

Le dispositif électronique est alors prêt à fonctionner. Cependant, une étape supplémentaire facultative peut consister à appliquer un vernis de protection sur l'antenne.

Selon une variante de réalisation, une autre étape facultative consiste à recouvrir la surface de la couche 10 supportant l'antenne par une deuxième couche, en matière plastique, papier ou carton afin de protéger l'antenne et de la cacher. Lorsque la deuxième couche est en plastique, le matériau est de préférence choisi parmi l'un des matériaux suivants : PET (Polyéthylène téréphtalate), PEN (Polyéthylène naphtalate), FR4 (résine époxy renforcée fibre de verre), PVC (Polychlorure de vinyle), PC (Polycarbonate) ou un polyimide commercialisé sous la marque Kapton par exemple.

Une dernière étape peut ensuite consister à décorer la surface du dispositif électronique obtenu.

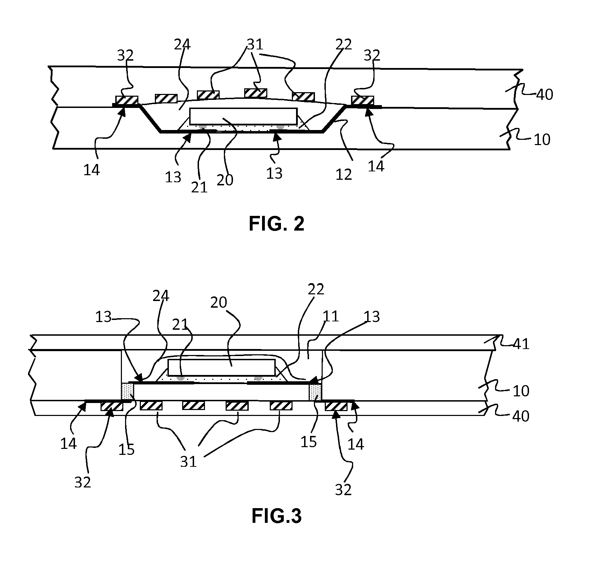

La Figure 2 représente un tel dispositif électronique sans contact, vu en coupe, dans lequel l'antenne est noyée entre deux couches 10, 40 de constitution du corps du dispositif. Sur cette coupe, les deux pistes d'interconnexion 12 s'étendent du fond de la cavité vers la surface de la première couche 10 dans laquelle est pratiquée la cavité. La puce de circuit intégré 20 est électriquement connectée au point de raccordement 13 de chaque piste d'interconnexion 12, par l'intermédiaire des bumps conducteurs 21 disposés sur ses deux plots de contact. La puce de circuit intégré est en outre fixée fermement dans le fond de la cavité grâce à une couche de colle 22, puis encapsulée dans la cavité de sorte que le matériau isolant de recouvrement 24 affleure la surface de la première couche 10. Les spires 31 d'antenne passent sur le matériau isolant de recouvrement 24 et les bornes d'extrémités 32 de l'antenne sont reliées respectivement aux points d'interconnexion 14 des pistes d'interconnexion 12, situés à la surface de la première couche 10 supportant la cavité 11. La couche supérieure 40 du dispositif peut être fixée sur la première couche 10 par tout moyen approprié. Ainsi, si les deux couches sont en plastique, elles peuvent par exemple être laminées. Si elles sont en carton ou papier, elles peuvent par exemple être collées au moyen d'un matériau adhésif.

La Figure 3 représente un schéma en coupe d'un autre dispositif électronique sans contact réalisé selon un deuxième mode de réalisation. Sur cette coupe, le premier circuit électrique d'interconnexion s'étend du fond de la cavité 11 vers la surface du corps 10 opposée à la surface portant la cavité 11, par l'intermédiaire de vias conducteurs 15 pratiqués au droit de la cavité 11. La puce de circuit intégré 20 est électriquement connectée aux points de raccordement 13 par l'intermédiaire des bumps conducteurs 21 disposés sur ses deux plots de contact. La puce de circuit intégré est en outre fixée fermement dans le fond de la cavité grâce à une couche de colle 22, puis encapsulée dans la cavité. La Figure 3 illustre un exemple où le matériau isolant de recouvrement 24 ne comble que partiellement la cavité 11, afin de recouvrir la puce de circuit intégré 20 et au moins partiellement les points de raccordement 13, de manière à les protéger mécaniquement. Les spires 31 d'antenne sont réalisées sur la surface du corps 10 opposée à la cavité 11, et les bornes d'extrémités 32 de l'antenne sont reliées respectivement aux points d'interconnexion 14 situés sur cette même surface. Un vernis, ou une autre couche, 40 peut être fixé sur la première couche 10 par tout moyen approprié pour protéger l'antenne. Ainsi, si les deux couches sont en plastique, elles peuvent par exemple être laminées. Si elles sont en carton ou papier, elles peuvent par exemple être collées au moyen d'un matériau adhésif. De même, un vernis ou une autre couche 41 peut également être appliqué sur la surface supportant la cavité. Dans ce mode de réalisation, c'est le corps (10) du dispositif qui sert de pont isolant pour les spires d'antenne.

Le procédé de fabrication qui vient d'être décrit permet la réalisation d'une connexion entre la puce de circuit intégré et un circuit électrique, par exemple uneantenne, disposé n'importe où dans le dispositif, de manière rapide, simple et peu coûteuse. Le matériau de constitution du corps du dispositif, isolant électriquement, et/ou le matériau isolant de recouvrement permet de servir de pont isolant pour des spires d'antenne. Le nombre d'étapes de fabrication du dispositif électronique est réduit, puisqu'il n'est plus nécessaire de déposer un matériau isolant sur les spires d'antenne avant la réalisation d'un pontage conducteur. De plus, le procédé requiert moins de précision pour réaliser la connexion. Le coût de fabrication s'en trouve par conséquent réduit.

## Revendications

1. Dispositif électronique comprenant un corps (10) isolant électriquement, une cavité (11) ménagée dans le corps (10), une puce de circuit intégré (20) disposée dans la cavité, un matériau isolant de recouvrement (24) de ladite puce de circuit intégré, un premier circuit électrique (12) comprenant d'une part, au moins un premier point de raccordement électrique (13) à ladite puce de circuit intégré (20), ledit au moins un point de raccordement (13) étant disposé dans la cavité (11) et d'autre part, au moins une plage électrique (14) débouchant hors du matériau isolant de recouvrement (24), ledit dispositif étant **caractérisé en ce que** ladite au moins une plage électrique (14) constitue un point d'interconnexion destiné à connecter électriquement un deuxième circuit électrique (31) disposé sur une des faces du corps (10) et/ou sur ledit matériau isolant de recouvrement (24).

2. Dispositif électronique selon la revendication 1, **caractérisé en ce que** le deuxième circuit électrique (31) comprend au moins un élément choisi parmi l'un au moins des éléments suivants : une antenne radio fréquence, une antenne ultra haute fréquence, une capacité, une self, une plaque de condensateur.

3. Dispositif électronique selon l'une des revendications 1 à 2, **caractérisé en ce que** le matériau isolant de recouvrement (24) recouvre la puce de circuit intégré (20) et/ou ses points de raccordement (13).

4. Dispositif selon l'une des revendications précédentes, **caractérisé en ce que** le matériau de recouvrement (24) comble totalement la cavité (11) et affleure la surface du corps (10).

5. Dispositif selon l'une des revendications précédentes, **caractérisé en ce que** le deuxième circuit électrique (31) s'étend principalement sur le matériau isolant de recouvrement (24).

6. Dispositif selon l'une des revendications précédentes, caractérisé en que les points d'interconnexion (14) du premier circuit électrique sont disposés à la surface du corps (10) du dispositif, de part et d'autre de ladite cavité (11).

7. Dispositif selon l'une des revendications 1 à 6, **caractérisé en ce que** le deuxième circuit électrique est une antenne à motif spiralé, reportée à la surface du corps (10), dont les spires (31) recouvrent le matériau isolant de recouvrement (24) et dont les bornes d'extrémité (32) sont reliées aux points d'interconnexion (14) du premier circuit électrique.

8. Dispositif selon l'une des revendications 1 à 4, **caractérisé en ce que** le premier circuit électrique comprend en outre au moins un via conducteur (15) reliant ledit au moins un point de raccordement (13) audit au moins un point d'interconnexion (14), ledit point d'interconnexion (14) étant disposé sur une surface du corps (10) opposée à la surface supportant ladite cavité (11).

9. Dispositif électronique selon la revendication 1, **caractérisé en ce que** la cavité (11) présente des flancs inclinés.

10. Dispositif électronique selon l'une des revendications 1 à 3, **caractérisé en ce que** le matériau de constitution des premier et deuxième circuits électriques est une encre conductrice choisie parmi l'une au moins des encres suivantes : une encre à base de nanoparticules métalliques, une encre à base de nanotubes de carbone ou de graphène, une encre à base de polymères conducteurs, ou encore un complexe métal à base de ligand organique.

11. Procédé de fabrication d'un dispositif électronique comportant un corps (10) isolant électriquement, ledit procédé consistant à ménager une cavité (11) dans ledit corps, pour y reporter une puce de circuit intégré (20) qui est ensuite recouverte d'un matériau isolant de recouvrement (24), et à réaliser un premier circuit électrique comprenant d'une part, au moins un point de raccordement (13) à ladite puce de circuit intégré (20) et d'autre part, une plage électrique (14) débouchant hors du matériau isolant de recouvrement (24), ledit procédé étant **caractérisé en ce qu'il** comprend en outre une étape consistant à réaliser un deuxième circuit électrique (31, 32) sur une des faces du corps (10) et/ou sur ledit matériau isolant de recouvrement (24) et à le connecter électriquement sur ladite au moins une plage électrique (14) qui constitue un point d'interconnexion.

12. Procédé selon l'une des revendications 6 à 7, **caractérisé en ce que** la cavité est réalisée avec des flancs inclinés vers la surface.

13. Procédé selon l'une des revendications 6 à 8, **caractérisé en ce que** les premier (12) et deuxième (31, 32) circuits électriques sont réalisés par impression d'encre conductrice par une technique de jet d'encre, spray, dépôt assisté par Laser, de sérigraphie, flexographie ou héliographie.

14. Procédé selon l'une des revendications 6 à 9, **caractérisé en ce que** le premier circuit électrique (12) est réalisé par impression par jet d'encre, dépôt assisté par Laser ou spray.

15. Procédé selon l'une des revendications 6 à 9, **caractérisé en ce que** le deuxième circuit électrique (31, 32) est réalisé par impression par sérigraphie, flexographie, ou héliographie.
